# EUROPEAN PATENT SPECIFICATION

(11) **EP 1 469 413 B1**
(45) Date of publication and mention of the grant of the patent: **13.09.2006**
(21) Application number: 03425311.2
(22) Date of filing: 14.05.2003
(51) Int. Cl.: G06K 7/10

(54) **Optical code reader**
Leser für optische Kodierungen
Lecteur pour des codes optiques

(30) Priority: 16.04.2003 WO PCT/IT03/00242
(43) Date of publication of application: 20.10.2004
(73) Proprietor: DATALOGIC S.P.A., 40012 Lippo di Calderara di Reno (Bologna) (IT)
(72) Inventor: Benedetti, Michele, 40012 Lippo di Calderara di Reno (BO) (IT); Bianchi, Maurizio, 40126 Bologna (IT); Bottazzi, Davide, 40127 Bologna (IT)
(74) Representative: Checcacci, Giorgio

(56) References cited:
- US-A- 5 566 732
- US-A- 5 877 507
- US-A- 6 160 925
- US-A1- 2003 006 281
- PATENT ABSTRACTS OF JAPAN vol. 0081, no. 33 (P-281), 20 June 1984 (1984-06-20) -& JP 59 035276 A (NIPPON DENSO KK), 25 February 1984 (1984-02-25)

## Description

The present invention refers to a reader or device for reading an optical code, of the static type.

With the indication "of the static type" that category of readers is meant in which the reading of the code takes place through simultaneous illumination of all of the code and acquisition of its overall image through a single or two-dimensional sensor, such as a CCD or a CMOS. The present invention thus does not concern scanner-type readers, in which the reading of the code takes place by successive scanning of the various zones of the codes, illuminated in succession typically through a laser beam scanner and thus equally read in succession through a substantially punctiform sensor.

By "optical code" it is meant to indicate a group of graphic signals (arranged on a label or directly on a product) through which a piece of information is coded as a sequence of black zones and white zones or else variously coloured zones, arranged according to one or more directions. Examples of such codes are barcodes, stacked codes, two-dimensional codes, colour codes and others. The term optical code also comprises in general other graphic forms with an information coding function, including printed characters (letters, numbers) or special shapes (patterns), such as seals, logos and signatures.

In general, a static reader comprises, on one side, a light source and an optical illumination path which extends from the light source towards the code and, on the other side, an optical sensor and an optical imaging system, arranged in an image reception optical path which extends from the code to the optical sensor. The whole thing is arranged in a suitable housing, equipped with at least one window, through which both the optical illumination path and the optical image reception path, i.e. both the light which illuminates the code and the light which goes towards the sensor from the illuminated code, preferably pass. The optical imaging system is a group of optical components (such as typically lenses and possibly also diaphragms) for the focusing of the image of the code on the sensor.

In these readers there is the risk that part of the illumination light emitted by the source may directly reach the sensor, overpowering in intensity the diffused light coming from the illuminated code and thus preventing the code itself from being read. This can happen when even a small portion of the light emitted by the source reaches any inner wall of the reader and from here spreads or reflects towards the sensor. To reduce such a risk, it is attempted both to use a light source with emission which is as confined as possible to the inside of a well-defined emission cone, and to position such a source as close as possible to the window, possibly foreseeing screens to prevent the emitted light from heading towards the inside of the reader and thus towards the sensor.

So-called portable readers are known, which are intended to be used manually and thus gripped by an operator (for example a till-operator at a supermarket). In these readers, to make it easier for the operator to grip them, an angled optical image reception path is generally used, through the introduction in the path itself of a mirror. This allows to obtain a main body of the reader extending in one direction, substantially suitable to be gripped in one hand, whereas the window is angled more or less transversally with respect to the aforementioned direction. The operator thus manages to point the reader towards the code for reading without having to put his wrist through uncomfortable stresses. Readers of this type are known, for example, from US-A-4,528,444, US-A-4,818,847, US-A-5,430,285, US-A-5,449,892.

In these readers, the light source is arranged substantially next to the window, on one side thereof, normally behind a screen which prevents the transmission of the light emitted directly towards the sensor. The illumination light thus comes out from the window in a different direction to the optical image reception path. Consequently, it is only possible to read a code if it is within a certain maximum distance from the reader, since up to that distance the code can be both on the optical image reception path, and inside the illumination cone of the source. Beyond such a distance, the code if illuminated shall be outside the optical reception path (and thus the light emitted from it cannot be received and read by the reader), and if vice-versa it is arranged on the optical image reception path it will not be illuminated (and thus it will not emit the light necessary for it to be read). Fixed readers are also known, which are stably mounted inside an apparatus or a unit in a predefined position, to read (generally automatically, without the intervention of an operator) codes carried by objects which are placed or made to pass in front of the reader. In these readers, it is often appropriate that reading can take place correctly also for very different distances between the reader and the code. Of course, this requires an optical imaging system that ensures adequate depth of field, possibly thanks to an automatic focusing system. However, it is also necessary, at least for all of the depth of field in which the optical imaging system manages to ensure focusing which is sufficient for carrying out the reading, that the illumination light reaches the code when it is on the optical image reception path.

JP 59 035276 A discloses a portable device for reading an optical code according to the preamble of claim 1, comprising an optical sensor, a light source, an optical illumination path which extends from the light source towards the code, an optical image reception path which extends from the code to the optical sensor, an optical imaging system arranged in the image reception path, a flat mirror arranged in the optical image reception path between the code and the optical imaging system; the optical illumination path and the optical image reception path provide for reflection on said flat mirror. The light sources are relatively far from the mirror, and the light emitted therefrom passes through lenses before reaching the mirror.

US 5,566,732 discloses a beverage dispenser with a beverage flow control. A mechanism reads an indicia (e.g. a bar code) printed on a container to identify the volume to be dispensed.

The inventors of the present invention have realised, by facing some specific fixed applications in which a particularly low bulk was required, that in order to reduce the size of the reader it is sometimes preferable to have an image reception path which is not rectilinear but rather angled or deviated. In such a way, the sensor and the optical imaging system are aligned in a longitudinal direction, allowing the bulk of the reader to extend mainly in such a longitudinal direction, whereas the image acquisition takes place from a different direction, which is transversal or in any case inclined.

The problem at the basis of the invention, is that of realising a reader having limited bulk.

The present invention, therefore, concerns a static type device for reading an optical code, comprising a single or two-dimensional optical sensor, a light source for illuminating the optical code, an optical illumination path which extends from the light source towards the code, an optical image reception path which extends from the code to the optical sensor, an optical imaging system arranged in the optical image reception path, a flat mirror arranged in the optical image reception path between the code and the optical imaging system, the optical illumination path and the optical image reception path providing for reflection on said flat mirror characterized in that said light source is in direct and close proximity of said flat mirror and in that the device is a fixed device.

The fact that both the optical illumination and image reception paths provide for reflection on the same mirror allows the device to be particularly compact, thus suitable for applications where the bulk is critical.

Moreover, the use of a same mirror to deviate both the optical image reception path and the optical illumination path allows the direction of both paths to be controlled simultaneously, acting upon the inclination of the mirror. The optical image reception path has a reception axis, with a first portion between the sensor and the mirror and a second portion between the mirror and the code, said first and second portions defining a first plane. In the same way, the optical illumination path has an overall illumination axis, with a first portion between the light source and the mirror and a second portion between the mirror and the code, said first and second portions defining a second plane. "Image reception axis" means the direction along which the image of the code C can reach the sensor. Such a direction is defined by the position and by the characteristics of the sensor and of the optical imaging system, and it is deviated by the mirror.

"Overall illumination axis" means the direction along which the overall light emission intensity of the light source is at its maximum. Such a direction is defined by the position and by the characteristics of the light source.

Preferably, the second plane and the first plane are parallel, more preferably coinciding. Even more preferably, the first portion of the image reception axis is parallel to the first portion of the overall illumination axis, and the second portion of the image reception axis is parallel to the second portion of the overall illumination axis. In these conditions, the image reception and overall illumination axes are always substantially side by side to each other. From this the possibility follows of illuminating and reading codes arranged at whatever distance (obviously provided the focusing operated by the optical imaging system is suitable). This solution is advantageous also in terms of simplification of the assembly of the light source.

The light source can comprise a single illuminating element, with light emission characteristics suitable for satisfying the specific illumination requirements. Preferably, however, the light source comprises a plurality of illuminating elements, each of which has its own illumination axis, the illumination axes of all of the illuminating elements lying on an illumination plane which intersects said second plane at the overall illumination axis. The use of many lighting elements allows both having a substantially elongated light source, suitable for illuminating codes which have a length substantially greater than the width, and positioning the overall illumination axis with greater freedom. In particular, it is possible to make the overall illumination axis close to or even coinciding with the image reception axis, without there being any lighting element along such an axis.

The illumination axes of the illuminating elements can be parallel to each other, or else divergent or convergent, according to the illumination requirements and the illuminating characteristics of the elements used.

The illuminating elements can be of various types. Preferably, they are LEDs, particularly suitable for their versatility combined with a low cost.

The device according to the invention can be realised as an autonomous physical component, intended for assembly on an apparatus, or else can simply be a group of components mounted in a more complex apparatus. Preferably, however, to ensure correct assembly with regard to the optical positioning, the mirror and the optical imaging system are mechanically bound together by a bearing structure.

The mirror can have a fixed inclination, predetermined in relation to the specific application, or else adjustable. This allows both use in situations in which it is desirable to vary the inclination, and above all the production of standardised components which can easily be adapted to different applications.

In another aspect thereof, the invention concerns the use of a fixed device of the type presented above in an apparatus for preparing hot or cold drinks, for reading an optical code containing information used for the preparation and supply of the drink by the apparatus itself. In yet another aspect, the invention concerns an apparatus for preparing hot or cold drinks, comprising a fixed device of the type presented above, for reading an optical code containing information used for preparing and supplying the drink by the apparatus itself.

Further characteristics and advantages of the invention shall become clearer from the following description of a preferred embodiment thereof, made with reference to he attached drawings. In such drawings:
- figure 1 is a longitudinal section view of a device according to the invention;

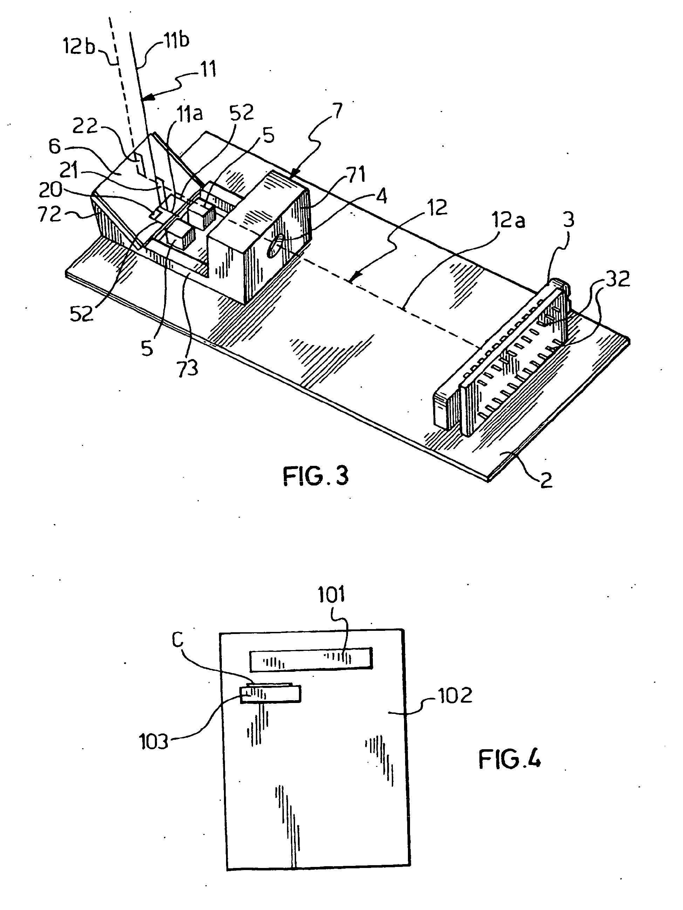

- figures 2 and 3 are perspective views of the device of figure 1, without the outer casing, taken according to different angles;
- figure 4 is a schematic view of an apparatus, particularly an apparatus for preparing drinks, incorporating the device of figure 1.

In the figures, a device according to the invention, for reading an optical code C, is wholly indicated with 1. It comprises a support base 2 on which an optical sensor 3, an optical imaging system 4, a light source formed from a pair of illuminating elements 5 and a flat mirror 6, simply reflecting, are mounted.

The optical sensor 3 is of the single-dimensional type, for example a CCD or a CMOS, with acquisition of an overall image on a sensitive portion 31. In it the optical signal collected on the sensitive portion 31 is converted into a group of electrical signals which are sent to the outside through a series of electrical contacts 32 and then processed.

On the base 2, components (not shown) can also be mounted for the analogue and digital treatment of the electrical signals extracted from the optical sensor 3, such as one or more filters, an analogue/digital converter and a microprocessor possibly also comprising a decoder for processing the digital signal and for decoding the optical code C.

The optical imaging system 4 comprises a group of optical components (lenses, diaphragms or similar) for focusing the image of the code C on the sensitive portion 31 of the sensor 3. The inner structure of the optical imaging system 4 is per se conventional and not illustrated in detail. The optical imaging system 4 can also be equipped with a device for automatically controlling focusing.

The optical imaging system 4 and the mirror 6 are preferably mounted together on the base 2, with the interposition of the same bearing structure 7, by which they are mechanically bound. To this aim the structure 7 comprises a body 71 for housing the optical imaging system 4, a support 72 for the mirror 6 and two arms 73 which connect the body 71 to the support 72.

Advantageously, the structure 7 is monolithic.

According to an advantageous variant (not shown), the illuminating elements 5 can also be mounted on the bearing structure 7 equipped, for the purpose, with a horizontal support base.

According to a variant (not shown), the optical imaging system 4 and the mirror 6 are mounted separately on the base 2 through respective supports.

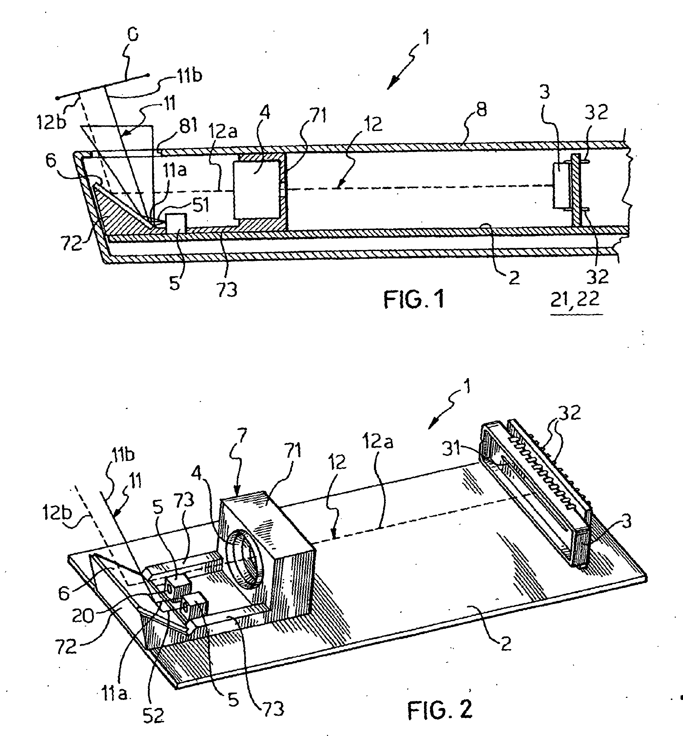

Figure 1 shows an outer casing 8, which encloses all of the elements named above. Such a casing 8 can be an actual bearing container, it can be a cover which mechanically matches with the base 2, or else it can just be defined by adjacent walls of an apparatus in which the device is housed. A reading window 81 is formed in the casing 8.

The two illuminating elements 5 are two LEDs (in this particular embodiment of the SMD type) mounted on the base 2, and together form a light source. Light energy is emitted from each of the elements 5 in a certain emission cone 51 (schematically represented in figure 1), having maximum intensity according to an illumination axis 52. The axes 52 of the two elements 5 are parallel to each other.

Considering the light energy emitted by the group of two elements 5 and directed by the mirror 6, an overall illumination axis 11 is defined, according to the meaning defined above.

The overall illumination axis 11 defines an optical illumination path towards the mirror 6 and thus towards the code C. Such an axis 11 is divided in a first portion thereof 11a between the light source and the mirror 6 and a second portion thereof 11b between the mirror and the code C. The portion 11a of the illumination axis 11 is on the same illumination plane 20 with the two axes 52, parallel and in the middle of them. It should also be noted that neither of the two illuminating elements 5 is on the overall illumination axis 11, since the position of such an axis 11 depends upon the combination of the illuminating contributions of the two elements 5, and thus it is substantially equally spaced from such elements.

Between the sensor 3 and the code C an optical image reception path is also defined, along which the mirror 6 and the optical imaging system 4 are placed, with the latter arranged between the mirror 6 and the sensor 3. Such an optical path is defined by an image reception axis 12, in turn divided into a first portion thereof 12a between the sensor 3 and the mirror 6 and a second portion thereof 12b between the mirror 6 and the code C. On the first portion 12a there is the optical imaging system 4.

The two portions 12a and 12b of the image reception axis 12 define a plane 22, coinciding with the plane 21 in which the two portions 11a and 11b of the overall illumination axis 11 also lie. Such a plane 21, 22 coincides with the section plane of figure 1. The plane 21, 22 is perpendicular to the illumination plane 20, defined by the illumination axes 52 of the illuminating elements 5.

The first portions 12a and 11a of the image reception axis 12 and overall illumination axis 11 are parallel to each other, in the plane 21, 22. Equally parallel and in the plane 21, 22 are consequently the respective second portions 12b and 11b.

Thanks to this structure, the illumination light leaves the device 1 in a direction parallel to the image reception axis 12, so that when the device 1 "aims" at the code C (i.e. the code C is on the axis 12), the light produced by the illumination source 5 is also addressed towards such a code C.

The direction of the axis 12 and of the axis 11 depends upon the inclination of the mirror 6 on the base 2. Such an inclination shall thus clearly be chosen according to the specific fixed application for which the device 1 is intended. Assembly of the mirror 6 with variable inclination can also be foreseen, above all to ease the adaptation of a single product to different applications.

Of course, many modifications and variants can be brought to the described device 1.

For example, the illuminating elements 5 can be not only different in number, but also in a different position. In particular, they can be arranged next to the optical imaging system 4, on the two sides thereof.

According to a variant, the illuminating elements 5 can be arranged along the vertical direction of the device, for example near the optical imaging system 4, preferably fixed to the support 71, and they shall be directed towards the mirror 6 so that the respective illumination paths are reflected by the mirror 6.

With respect to the preferred solution described and illustrated in the figures, it is also possible that the illuminating elements 5 are mounted on the base 2 or on the structure 7 so that the respective illumination axes 52 are inclined with respect to the portion 12a of the image reception axis 12 but still in such a way that the respective illumination paths are reflected by the mirror 6.

Moreover, the light source can be formed from a single illuminating element (for example an LED) arranged in the same way as one of the lighting elements shown in the figures or just described.

In the cases described above, the inclination of the illuminating elements 5 and the relative position between illuminating elements 5, mirror 6 and optical imaging system 4 can be chosen according to the specific application and, particularly for fixed applications, must be chosen so as to avoid intense reflections of the light emitted by the light source, inside the device 1 and, therefore, potentially, on the optical sensor 3.

In the case in which the optical sensor 3 is two-dimensional, it is also preferable, although not necessary, to provide further illuminating elements 5, for example on planes parallel to the illumination plane 20 and arranged so as not to hinder the optical image reception path.

Moreover, since the preferred solution described comprises a mirror 6 realised as a single reflecting surface, it is also possible for it to be made up of two or more reflecting flat portions arranged adjacent to each other in a vertical or horizontal direction and all lying on the same optical plane.

A device according to the invention can be used in various types of apparatuses. In particular, as shown schematically in figure 4, such a device 101 can advantageously be used in a complex apparatus 102 for the distribution of food or for the preparation of hot or cold drinks, where it is used to read an optical code C applied for example to a container 103. Thanks to such reading, the apparatus 102 can automatically activate some operating functions for the preparation and supply of one or more drinks. Apparatuses of this type are known in general, for example, from US-A-4,858,523, US-A-5,094,153 and US-A-5,566,732, in which one or more barcode readers are used to read codes arranged on containers, cups or other recipients and in which a control unit uses the information associated with the code read to command the supply of a suitable amount of water or drink or the selection of a certain type of drink from various drinks, thus automating some preparation steps.

Such apparatuses are often somewhat mechanically complex, and it is thus easy that structural restrictions for the housing of the device for reading an optical code are present. Consequently, the use of a device 101 in accordance with the invention, which is small in size and which allows housing in a variety of positions, by simply choosing a suitable inclination for the mirror becomes advantageous.

## Claims

1. A static type device for reading an optical code (C), comprising a single or two-dimensional optical sensor (3), a light source (5) for illuminating the optical code, an optical illumination path which extends from the light source (5) towards the code (C), an optical image reception path which extends from the code (C) to the optical sensor (3), an optical imaging system (4) arranged in the image reception path, a flat mirror (6) arranged in the optical image reception path between the code (C) and the optical imaging system (4), the optical illumination path and the optical image reception path providing for reflection on said flat mirror (6) **characterised in that** said light source (5) is in direct and close proximity of said flat mirror (6) and **in that** the device is a fixed device.

2. Device according to claim 1, wherein
- the optical image reception path has a reception axis (12), with a first portion (12a) between the sensor (3) and the mirror (6) and a second portion (12b) between the mirror (6) and the code (C), said first and second portions (12a, 12b) defining a first plane (22);
- the optical illumination path has an overall illumination axis (11), with a first portion (11a) between the light source (5) and the mirror (6) and a second portion (11b) between the mirror (6) and the code (C), said first and second portions (11a, 11b) defining a second plane (21) parallel to the first plane (22).

3. Device according to claim 2, wherein the first plane (22) and the second plane (21) coincide.

4. Device according to claim 2 or 3, wherein the first portion (12a) of the image reception axis (12) is parallel to the first portion (11a) of the overall illumination axis (11), and the second portion (12b) of the image reception axis (12) is parallel to the second portion (11b) of the overall illumination axis (11).

5. Device according to any one of the previous claims, wherein the light source (5) comprises a single illuminating element.

6. Device according to any one of claims 2 to 4, wherein the light source (5) comprises a plurality of illuminating elements (5), each of which has its own illumination axis (52), the illumination axes (52) of all of the illuminating elements (5) lying on an illumination plane (20) which intersects said second plane (21) at the first portion (11a) of the overall illumination axis (11).

7. Device according to any one of claims 2 to 4, wherein the light source (5) comprises a plurality of illuminating elements, each of which has its own illumination axis, the illumination axes of the illumination elements lying on a plurality of illumination planes which intersect said second plane.

8. Device according to claim 6 or 7, wherein the illumination axes (52) of the illuminating elements (5) are parallel to each other.

9. Device according to any one of claims 6-8, wherein the illuminating elements (5) are LEDs.

10. Device according to claim 1, wherein the mirror (6) and the optical imaging system (4) are mechanically bound together by a same bearing structure (7), mounted as a separate subassembly on a base 2 of the device (1).

11. Device according to claim 1, wherein the inclination of the mirror (6) is adjustable.

12. Device according to claim 9, wherein the LEDs (5) are of the SMD type.

13. Device according to claim 9, wherein the LEDs (5) emit light in an emission cone (51), oriented towards the mirror (6) and having maximum intensity according to said illumination axis (52).

14. Use of a device (1, 101) according to claim 13 in an apparatus (102) for preparing drinks, by reading an optical code (C) containing information on the drink which is to be prepared.

15. Apparatus for preparing drinks, comprising a device (1, 101) according to claim 13, for reading an optical code (C) containing information on the drink which must be prepared.

## Patentansprüche

1. Ortsfeste Vorrichtung zum Lesen eines optischen Codes (C), mit einem einzelnen oder zweidimensionalen optischen Sensor (3), eine Lichtquelle (5) zum Beleuchten des optischen Codes, einem optischen Beleuchtungspfad, der von der Lichtquelle (5) in Richtung auf den Code (C) verläuft, einem optischen Bildempfangspfad, der von dem Code (C) bis zu dem optischen Sensor (3) verläuft, einem optischen Abbildungssystem (4), das in dem Bildempfangspfand angeordnet ist, einem flachen Spiegel (6), der in dem optischen Bildempfangspfad zwischen dem Code (C) und dem optischen Abbildungssystem (4) angeordnet ist, wobei der optische Beleuchtungspfad und der optische Bildempfangspfad eine Reflektion auf den flachen Spiegel (6) ermöglichen, **dadurch gekennzeichnet, daß** die Lichtquelle (5) in der direkten und unmittelbaren Umgebung des flachen Spiegels (6) ist und das die Vorrichtung eine befestigte Vorrichtung ist.

2. Vorrichtung nach Anspruch 1, **dadurch gekennzeichnet, daß**
- der optische Bildempfangspfad eine Empfangsachse (12) aufweist, mit einem ersten Abschnitt (12A) zwischen dem Sensor (3) und dem Spiegel (6) und einem zweiten Abschnitt (12B) zwischen dem Spiegel (6) und dem Code (C), wobei der erste und der zweite Abschnitt (12A, 12B) eine erste Ebene (22) definieren;
- der optische Beleuchtungspfad eine Gesamtbeleuchtungsachse (11) aufweist, mit einem ersten Abschnitt (11A) zwischen der Lichtquelle (5) und dem Spiegel (6) und einem zweiten Abschnitt (11B) zwischen dem Spiegeln (6) und dem Code (C), wobei der erste und der zweite Abschnitt (11A, 11B) eine zweite Ebene (21) parallel zu der ersten Ebene (22) definieren.

3. Vorrichtung nach Anspruch 2, **dadurch gekennzeichnet, daß** die erste Ebene (22) und die zweite Ebene (21) ?.

4. Vorrichtung nach Anspruch 2 oder 3, **dadurch gekennzeichnet, daß** der erste Abschnitt (12A) der Bildempfangsachse (12) parallel zu dem ersten Abschnitt (11A) der Gesamtbeleuchtungsachse (11) ist und der zweite Abschnitt (12B) der Bildempfangsachse (12) parallel zu dem zweiten Abschnitt (11B) der Gesamtbeleuchtungsachse (11) ist.

5. Vorrichtung nach einem der vorangehenden Ansprüche, **dadurch gekennzeichnet, daß** die Lichtquelle (5) ein einzelnes Beleuchtungselement umfasst.

6. Vorrichtung nach einem der Ansprüche 2 bis 4, **dadurch gekennzeichnet, daß** die Lichtquelle (5) eine Vielzahl von Beleuchtungselementen (5) umfasst, von denen jedes seine eigene Beleuchtungsachse (52) aufweist, die Beleuchtungsachsen (52) aller Beleuchtungselemente (5) in einer Beleuchtungsebene (20) liegen, die die zweite Ebene (21) in dem ersten Abschnitt (11A) der Gesamtbeleuchtungsachse (11) schneidet.

7. Vorrichtung nach einem der Anspruche 2 bis 4, **dadurch gekennzeichnet, daß** die Lichtquelle (5) eine Vielzahl von Beleuchtungselementen umfasst, die jeweils ihre eigene Beleuchtungsachse aufweisen, die Beleuchtungsachsen der Beleuchtungselemente in einer Vielzahl von Beleuchtungsebenen liegen, die die zweite Ebene schneiden.

8. Vorrichtung nach Anspruch 6 oder 7, **dadurch gekennzeichnet, daß** die Beleuchtungsachsen (52) der Beleuchtungselemente (5) parallel zueinander sind.

9. Vorrichtung nach einem der Anspruche 6 bis 8, **dadurch gekennzeichnet, daß** die Beleuchtungselemente (5) LED's sind.

10. Vorrichtung nach Anspruch 1, **dadurch gekennzeichnet, daß** der Spiegel (6) und das optische Abbildungssystem (4) durch eine gleiche Lagerstruktur (7) mechanisch miteinander verbunden sind, die als eine getrennte Baugruppe auf einer Basis 2 der Vorrichtung (1) angeordnet ist.

11. Vorrichtung nach Anspruch 1, **dadurch gekennzeichnet, daß** die Neigung des Spiegels (6) einstellbar ist.

12. Vorrichtung nach Anspruch 9, **dadurch gekennzeichnet, daß** die LED's (5) von dem 5MD-Typ sind.

13. Vorrichtung nach Anspruch 9, **dadurch gekennzeichnet, daß** die LED's (5) Licht in einem Abstrahlkonus (51) abstrahlen, der auf den Spiegel (6) gerichtet ist und eine maximale Intensität entsprechend der Beleuchtungsachse (52) aufweist.

14. Verwendung einer Vorrichtung (1, 101) gemäß Anspruch 13 in einem Automaten (102) zur Vorbereitung von Getränken durch Lesen eines optischen Codes (C), der Informationen über das Getränk enthält, das vorbereitet werden soll.

15. Automat zur Vorbereitung von Getränken mit einer Vorrichtung (1, 101) nach Anspruch 13 zum Lesen eines optischen Codes (C), der Informationen über das Getränk enthält, das vorbereitet werden muss.

## Revendications

1. Dispositif de type statique pour la lecture de code optique (C), comprenant un capteur optique à une ou deux dimensions, une source de lumière (5) pour illuminer le code optique, un chemin d'illumination optique qui s'étend depuis la source de lumière (5) vers le code optique (C), un chemin de réception d'image optique qui s'étend depuis le code optique (C) jusqu'au capteur optique (3), un système (4) d'imagerie optique disposé dans le chemin de réception d'image, un miroir plat (6) disposé dans le chemin de réception d'image optique entre le code (C) et le système (4) d'imagerie optique, le chemin d'illumination optique et le chemin de réception d'image optique assurant une réflexion sur ledit miroir plat (6), **caractérisé en ce que** ladite source de lumière (5) est en direct et juste à proximité dudit miroir plat (6) et **en ce que** le dispositif est fixe.

2. Dispositif selon la revendication 1, dans lequel
- le chemin de réception d'image optique possède un axe de réception (12), avec une première partie (12a) entre le capteur (3) et le miroir (6) et une seconde partie (12b) entre le miroir (6) et le code (C), lesdites première et seconde parties (12a, 12b) définissant un premier plan (22) ;
- le chemin d'illumination optique possède un axe d'illumination général (11), avec une première partie (11a) entre la source de lumière (5) et le miroir (6) et une seconde partie (11b) entre le miroir (6) et le code (C), lesdites première et seconde parties (11a, 11b) définissant un second plan (21) parallèle au premier plan (22).

3. Dispositif selon la revendication 2, dans lequel le premier plan (22) et le second plan (21) coïncident.

4. Dispositif selon la revendication 2 ou 3, dans lequel la première partie (12a) de l'axe (12) de réception d'image est parallèle à la première partie (11a) de l'axe (11) d'illumination général, et la seconde partie (12b) de l'axe (12) de réception d'image est parallèle à la seconde partie (11b) de l'axe (11) d'illumination général.

5. Dispositif selon l'une quelconque des revendications précédentes, dans lequel la source de lumière (5) comprend un seul élément d'illumination.

6. Dispositif selon l'une des revendications 2 à 4, dans lequel la source de lumière (5) comprend une pluralité d'éléments d'illumination (5), chacun possédant son propre axe d'illumination (52), les axes d'illumination (52) de tous les éléments d'illumination (5) se trouvant sur un plan d'illumination (20) qui croise ledit second plan (21) à la première partie (11a) de l'axe d'illumination général (11).

7. Dispositif selon l'une quelconque des revendications 2 à 4, dans lequel la source de lumière (5) comprend une pluralité d'éléments d'illumination, chacun possédant son propre axe d'illumination, les axes d'illumination des éléments d'illumination se trouvant sur une pluralité de plans d'illumination qui croisent ledit second plan.

8. Dispositif selon la revendication 6 ou 7, dans lequel les axes d'illumination (52) des éléments d'illumination (5) sont parallèles entre eux.

9. Dispositif selon l'une quelconque des revendications 6 à 8, dans lequel les éléments d'illumination (5) sont des diodes électroluminescentes (DEL).

10. Dispositif selon la revendication 1, dans lequel le miroir (6) et le système (4) d'imagerie optique sont mécaniquement liés ensemble par une même structure d'appui (7), montée comme un sous-assemble séparé sur une base (2) du dispositif (1).

11. Dispositif selon la revendication 1, dans lequel l'inclinaison du miroir (6) est ajustable.

12. Dispositif selon la revendication 9, dans lequel les DELs (5) sont de type CMS (SMD).

13. Dispositif selon la revendication 9, dans lequel les DELs (5) émettent une lumière dans un cône d'émission (51), orienté vers le miroir (6) et ayant une intensité maximum selon l'axe d'illumination (52).

14. Utilisation,du dispositif (1, 101) selon la revendication 13 dans un appareil (102) pour la préparation de boissons, par lecture d'un code optique (C) contenant de l'information sur la boisson qui doit être préparée.

15. Appareil pour la préparation de boissons, comprenant un dispositif (1, 101) selon la revendication 13, pour la lecture d'un code optique (C) contenant de l'information sur la boisson qui doit être préparée.
